# FASCICULE DE BREVET EUROPEEN

(11) **EP 3 187 410 B1**
(45) Date de publication et mention de la délivrance du brevet: **26.09.2018**
(21) Numéro de dépôt: 16206518.9
(22) Date de dépôt: 22.12.2016
(51) Int. Cl.: B64B 1/30, B64B 1/62

(54) **DIRIGEABLE HYDRIDE A ENVELOPPE EXTERIEURE SOUPLE ET COMPARTIMENTEE**
HYBRIDLUFTSCHIFF MIT FLEXIBLER UND UNTERTEILTER AUSSENHÜLLE
HYBRID AIRSHIP WITH FLEXIBLE, COMPARTMENTALISED OUTER SHELL

(30) Priorité: 29.12.2015 BE 201505849
(43) Date de publication de la demande: 05.07.2017
(73) Titulaire: Sonaca S.A., 6041 Gosselies (BE)
(72) Inventeur: SIMONIS, Alexandre, 4400 FLEMALLE (BE); GONZE, Yann, 5001 BELGRADE (BE); BARGETON, Etienne, 1190 FOREST (BE)
(74) Mandataire: Brevalex

(56) Documents cités:
- EP-A2- 1 770 009
- DE-A1-102007 019 141
- US-A- 1 762 845
- US-A1- 2009 314 879
- US-A1- 2015 076 279

## Description

### DOMAINE TECHNIQUE

La présente invention se rapporte au domaine des dirigeables, et plus particulièrement à celui des dirigeables hybrides à portances aérostatique et aérodynamique, capables de transporter une charge utile.

### ETAT DE LA TECHNIQUE ANTERIEURE

De l'art antérieur, il est essentiellement connu des dirigeables à portance aérostatique, dans lesquels la portance dépend du volume de gaz léger embarqué, ainsi que de son niveau de compression. Le gaz léger est également dit gaz porteur.

Avec ce type de dirigeable, la variation de l'altitude s'effectue en contrôlant le niveau de compression du volume de gaz léger, souvent de l'hélium. Plus ce niveau de compression est élevé, plus la portance est faible.

Un tel principe est par exemple connu du document WO2013/041820. Cependant, ce type de solution requiert un compresseur nécessitant une énergie très élevée pour faire varier le niveau de compression du volume d'hélium.

Un dirigeable hybride à portance aérostatique et à portance aérodynamique à enveloppe souple et ayant au moins une enceinte primaire remplie de gaz et des moyens de propulsion est connu du document US2015/076279.

### EXPOSÉ DE L'INVENTION

Pour répondre au moins partiellement à cet inconvénient, l'invention a tout d'abord pour objet un dirigeable hybride à portance aérostatique et à portance aérodynamique comprenant :
- des moyens de propulsion ;
- une enveloppe extérieure souple ;
- au moins une enceinte primaire remplie d'un gaz porteur, remarquable par ladite enceinte primaire Ep présentant une paroi élastique P₁ séparant cette enceinte d'un compartiment C₁, ce dernier présentant une paroi élastique Pᵢ séparant le compartiment C₁ d'un compartiment Cᵢ, ce dernier présentant une paroi élastique Pᵢ₊₁ séparant le compartiment Cᵢ d'un compartiment Cᵢ₊₁, et ainsi de suite jusqu'à une paroi élastique P_{J+1} séparant un compartiment C_{J} d'un compartiment C_{J+1} avec J correspondant à un entier supérieur ou égal à 1, chaque compartiment Cᵢ étant également délimité par l'enveloppe extérieure souple ;
- des moyens de communication Vᵢ entre chaque compartiment Cᵢ et son compartiment Cᵢ₊₁ adjacent ;
- des moyens de commande des moyens de communication Vᵢ ;
lesdits moyens de commande étant configurés de manière à :
(a) lors d'une phase ascendante avec le gaz porteur retenu par l'une des parois Pᵢ avec i quelconque entre 1 et J, maintenir les moyens de communication Vᵢ en configuration fermée de sorte que le gaz porteur, se dilatant avec l'altitude, exerce sur la paroi Pᵢ une pression capable d'engendrer une déformation élastique de la paroi Pᵢ d'une position nominale à une position de déformation maximale dans laquelle elle se plaque contre la paroi Pi+ien réduisant le volume du compartiment Cᵢ sensiblement à néant, grâce à une évacuation de l'air initialement prévu dans ce compartiment Cᵢ ;
(b) puis lorsque la paroi Pᵢ se trouve en position de déformation maximale, ouvrir les moyens de communication Vᵢ de sorte que la paroi Pᵢ retrouve sa position nominale, par rééquilibrage automatique des pressions du gaz porteur de part et d'autre de cette paroi Pᵢ ;
(c) puis le cas échéant, lors de la poursuite de la phase ascendante et après le retour de la paroi Pᵢ en position nominale, réitérer les actions (a) et (b) pour la paroi Pᵢ₊₁ autant de fois que nécessaire tant que i reste inférieur ou égal à J.

L'invention présente ainsi la particularité de mettre en oeuvre une portance aérostatique ainsi qu'une portance aérodynamique. Grâce à cette portance aérodynamique, il n'est plus nécessaire d'agir sur le niveau de compression du gaz porteur pour contrôler l'altitude de ce dirigeable hybride. La solution proposée permet, de façon astucieuse, de gérer le phénomène de dilatation du gaz porteur avec l'altitude, en prévoyant une conception à plusieurs compartiments dans lesquels ce gaz porteur peut pénétrer progressivement un à un, au cours d'une phase ascendante du dirigeable.

Par conséquent, le dirigeable ne nécessite plus de compresseur de gaz porteur comme dans l'art antérieur, et les moyens de propulsion employés sont moins énergivores que ce type de compresseur.

De plus, en étant réalisé essentiellement à l'aide d'éléments souples, il peut présenter un encombrement réduit au sol, lorsqu'il est vidé de son air et de son gaz porteur. Cela offre une grande facilité de transport du dirigeable. Cela rend également le dirigeable plus léger par rapport à des conceptions rigides ou semi-rigides plus classiques, ce qui permet de limiter les dimensions du dirigeable.

En outre, grâce à sa multi-compartimentation, le dirigeable hybride selon l'invention confère une sécurité accrue puisqu'en cas d'endommagement de l'un de ses compartiments, les autres continuent d'assurer une portance minimale.

Enfin, la multi-compartimentation permet de facilement adapter la quantité de gaz porteur embarquée aux caractéristiques du vol souhaité, en remplissant au sol un nombre de compartiments approprié. Ce nombre de compartiments remplis de gaz porteur peut ainsi varier suivant les vols, en fonction des besoins rencontrés pour chaque mission.

L'invention peut également présenter les caractéristiques optionnelles suivantes, prises isolément ou en combinaison.

Lesdits moyens de propulsion comprennent un ou plusieurs moteurs, de préférence montés pivotant selon un axe transversal du dirigeable hybride. Ceci permet d'entraîner un changement d'incidence du dirigeable, et également un contrôle latéral de ce dernier en appliquant des pivotements différents entre les moteurs situés de part et d'autre d'un plan médian. Ce contrôle latéral peut alternativement, ou simultanément, être effectué en appliquant des vitesses de rotation différentes sur les moteurs.

Ladite enveloppe extérieure souple définit une aile ou deux demi-ailes, dont la forme est maintenue au moins en partie par l'air / le gaz porteur situé dans l'enceinte primaire et les compartiments Cᵢ.

Ladite enceinte primaire est agencée de façon centrée sur le dirigeable, et une série de compartiments Cᵢ s'étend de chaque côté de l'enceinte primaire, selon une direction transversale du dirigeable.

Dans ce cas de figure, les deux séries de compartiments Cᵢ sont agencées symétriquement par rapport à un plan de symétrie du dirigeable.

Selon un premier mode de réalisation préféré de l'invention, les moyens de communication Vᵢ comprennent, pour chaque paroi élastique Pᵢ, une électrovanne agencée sur la paroi élastique Pᵢ associée.

Le dirigeable comporte alors également une électrovanne de sortie d'air associée au compartiment C_{J+1}, et configurée pour interdire / autoriser une communication d'air entre le compartiment C_{J+1} et l'extérieur du dirigeable.

Dans ce premier mode de réalisation préféré de l'invention, lesdits moyens de commande sont configurés pour que lors d'une phase ascendante, avec les moyens de communication Vᵢ en configuration fermée de sorte que le gaz porteur exerce sur la paroi Pᵢ une pression capable d'engendrer une déformation élastique de la paroi Pᵢ, les moyens de communication Vᵢ₊₁ à V_{J+1} ainsi que ladite électrovanne de sortie d'air soient maintenus en configuration ouverte. Cela permet l'évacuation de l'air par le dernier compartiment V_{J+1}, lors de la dilatation du gaz porteur. A cet égard, donné que la pression à l'intérieur du dirigeable doit être très légèrement supérieure à la pression externe afin de maintenir la forme aérodynamique, les configurations ouvertes des moyens de communication devraient être modulées pour conserver cette légère surpression interne.

Selon un second mode de réalisation préféré, le dirigeable hybride comporte un conduit de fluide débouchant à l'extérieur du dirigeable, et les moyens de communication Vᵢ comprennent, pour chaque paroi élastique Pᵢ pour i allant de 1 à J+1 :
- une électrovanne intermédiaire V_{int i} agencée sur le conduit de fluide ;
- une électrovanne V'ᵢ₋₁ d'une part raccordée en amont de l'électrovanne intermédiaire V_{int i} par rapport à un sens d'écoulement allant vers l'extérieur du dirigeable, et d'autre part communiquant avec le compartiment Cᵢ₋₁ ou l'enceinte primaire pour i=1 ; et
- une électrovanne V'ᵢ d'une part raccordée en aval de l'électrovanne intermédiaire V_{int i} par rapport à un sens d'écoulement allant vers l'extérieur du dirigeable, et d'autre part communiquant avec le compartiment Cᵢ.

Dans ce second mode de réalisation préféré, lesdits moyens de commande sont configurés pour que lors d'une phase ascendante, le maintien en configuration fermée des moyens de communication Vᵢ, commandé pour que le gaz porteur exerce sur la paroi Pᵢ une pression capable d'engendrer une déformation élastique de la paroi Pᵢ, est assuré en maintenant en configuration fermée ladite électrovanne V'ᵢ₋₁ et/ou ladite électrovanne intermédiaire V_{int i}, et en maintenant ladite électrovanne V'ᵢ en configuration ouverte. Cela permet à l'air contenu dans le compartiment Cᵢ de s'échapper par électrovanne V'ᵢ en direction du conduit de fluide, pour être extrait du dirigeable.

Lesdits moyens de commande sont alors de préférence configurés pour que lors d'une phase ascendante, avec les moyens de communication Vᵢ en configuration fermée de sorte que le gaz porteur exerce sur la paroi Pᵢ une pression capable d'engendrer une déformation élastique de la paroi Pᵢ, les électrovannes intermédiaires V_{int i+1} à V_{int J+1} soient maintenues en configuration ouverte. Ici également, les configurations ouvertes des moyens de communication devraient être modulées pour conserver la légère surpression à l'intérieur du dirigeable.

Quel que soit le mode de réalisation envisagé, le dirigeable hybride comporte de préférence des moyens d'aide à l'introduction d'air dans le compartiment C_{J+1}, lors d'une phase descendante du dirigeable hybride, au cours de laquelle le gaz porteur se rétracte avec la perte d'altitude.

Ladite enveloppe extérieure souple est réalisée dans un matériau moins souple que celui desdites parois élastiques, ce dernier étant préférentiellement un matériau élastomère.

L'invention a enfin pour objet un procédé de commande du dirigeable hybride tel que décrit ci-dessus, mis en oeuvre de sorte que :
(a) lors d'une phase ascendante avec le gaz porteur retenu par l'une des parois Pᵢ avec i quelconque entre 1 et J, les moyens de communication Vᵢ sont maintenus en configuration fermée de sorte que le gaz porteur, se dilatant avec l'altitude, exerce sur la paroi Pᵢ une pression engendrant une déformation élastique de la paroi Pᵢ d'une position nominale à une position de déformation maximale dans laquelle elle se plaque contre la paroi Pᵢ₊₁ en réduisant le volume du compartiment Cᵢ sensiblement à néant, grâce à une évacuation de l'air initialement prévu dans ce compartiment Cᵢ ;
(b) puis lorsque la paroi Pᵢ se trouve en position de déformation maximale, les moyens de communication Vᵢ sont ouverts de sorte que la paroi Pᵢ retrouve sa position nominale, par rééquilibrage automatique des pressions du gaz porteur de part et d'autre de cette paroi Pᵢ ;
(c) puis le cas échéant, lors de la poursuite de la phase ascendante et après le retour de la paroi Pᵢ en position nominale, les actions (a) et (b) sont réitérées pour la paroi Pᵢ₊₁ autant de fois que nécessaire tant que i reste inférieur ou égal à J.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un dirigeable hybride selon un mode de réalisation préféré de l'invention ;
- la figure 2 représente une vue en perspective d'un dirigeable hybride selon une alternative de réalisation ;
- la figure 3 représente schématiquement une partie du dirigeable hybride montré sur la figure 1, en coupe transversale prise le long de la ligne III-III de cette figure 1 ;
- les figures 4a à 4h représentent le principe propre à l'invention selon lequel les compartiments du dirigeable se remplissent un à un de gaz porteur, au cours d'une phase ascendante du dirigeable ;
- les figures 5a à 5f représentent le principe propre à l'invention selon lequel les compartiments du dirigeable se vident un à un du gaz porteur, au cours d'une phase de descente du dirigeable ;
- les figures 6a à 6h représentent des vues analogues à celles des figures 4a à 4h, avec le dirigeable se présentant sous la forme d'un second mode de réalisation préféré de l'invention ; et
- les figures 7a à 7f représentent des vues analogues à celles des figures 5a à 5f, avec le dirigeable se présentant sous la forme du second mode de réalisation préféré de l'invention.

### EXPOSÉ DÉTAILLÉ DE MODES DE RÉALISATION PRÉFÉRÉS

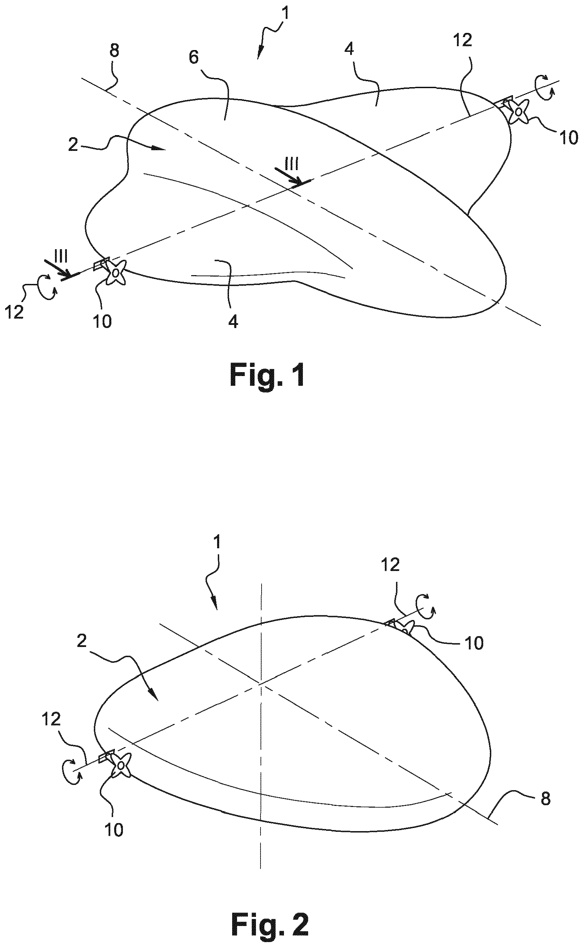

En référence tout d'abord à la figure 1, il est représenté un dirigeable hybride 1 selon un premier mode de réalisation préféré de l'invention. Le dirigeable comporte une enveloppe extérieure souple 2 qui définit une ou plusieurs surfaces aérodynamiques, ici deux demi-ailes 4 situées de part et d'autre d'une partie centrale 6 du dirigeable qui s'étend selon un axe longitudinal 8.

Dans ce premier mode de réalisation préféré, il est prévu un moteur 10 à l'extrémité de chacune des demi-ailes 4. Alternativement, ces moteurs pourraient être à l'arrière ou à l'avant du dirigeable hybride. Chaque moteur 10 est monté pivotant selon un axe transversal 12 du dirigeable, cet axe 12 étant orthogonal à l'axe 8 et correspondant de préférence à l'axe de tangage du dirigeable. Dans l'alternative de réalisation montrée sur la figure 2, l'enveloppe extérieure souple 2 définit une aile unique, toujours avec ses moteurs 10 agencés latéralement, à l'avant ou à l'arrière.

Grâce à la capacité de pivotement associée aux moteurs 10, le dirigeable 1 peut aisément changer d'incidence afin d'atteindre l'altitude désirée, en descente ou en montée. De plus, il peut être prévu une capacité de pivotement étendue permettant d'amener les moteurs verticalement, dans le but d'assurer les phases de décollage et d'atterrissage.

Le contrôle latéral du dirigeable 1 peut être réalisé en différenciant la vitesse de rotation des deux moteurs 10, et/ou en différenciant leurs angles de pivotement selon l'axe 12.

Dans ce premier mode de réalisation, le dirigeable 1 ne comprend pas d'élément mobile aérodynamique, comme un volet mobile de bord d'attaque ou élément similaire. Néanmoins, ce type d'élément pourrait être mis en oeuvre, sans sortir du cadre de l'invention. La portance aérodynamique recherchée avec le dirigeable 1 selon le premier mode de réalisation préféré est ainsi obtenue grâce à la combinaison des demi-ailes 4 et des moteurs 10 à inclinaisons variables.

Cependant, le caractère hybride du dirigeable 1 se traduit par le fait que la portance est non seulement aérodynamique, mais également aérostatique grâce à un volume de gaz porteur embarqué, par exemple de l'hélium.

Il est noté que les proportions de portance aérostatique et de portance aérodynamique se répartissent en fonction de la charge utile emportée, et du plafond de service dépendant de la mission du dirigeable 1. Idéalement, la proportion de portance aérostatique tend à équilibrer le poids de la structure à vide. En effet, l'intérêt est de conserver une portance aérostatique légèrement inférieure au poids de la structure à vide, c'est-à-dire sans la charge utile, afin d'éviter les problèmes liés au décollage spontané du dirigeable lors des phases de chargement/déchargement au sol. Ainsi, les moteurs 10 servent essentiellement à soulever la charge utile, mais procurent également l'avance et éventuellement la direction, comme cela a été évoqué ci-dessus.

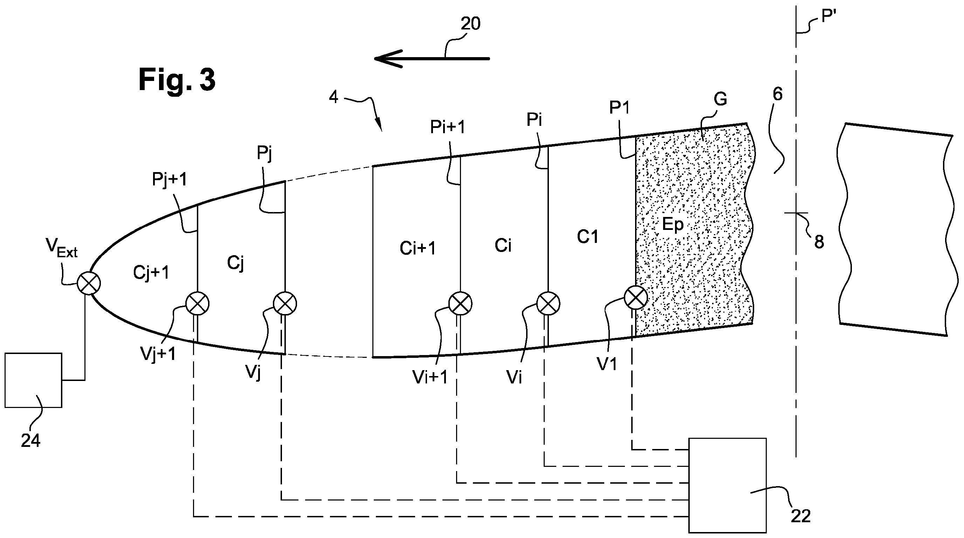

En référence à présent à la figure 3, il est représenté l'une des deux demi-ailes 4 du dirigeable, étant entendu que l'autre demi-aile est réalisée de manière symétrique par rapport à un plan vertical et longitudinal médian P' du dirigeable, correspondant à un plan de symétrie de ce dirigeable. Ce plan P' traverse la partie centrale 6, qui renferme une enceinte primaire Ep remplie du gaz porteur G. De part et d'autre de cette enceinte primaire Ep, il est respectivement prévu deux séries de compartiments Cᵢ, ces deux séries définissant les deux demi-ailes 4 et étant agencées symétriquement par rapport au plan médian P'.

Chaque série comprend donc plusieurs compartiments qui se succèdent selon la direction d'envergure de l'aile associée, cette direction d'envergure correspondant à la direction transversale du dirigeable et étant représentée par la flèche 20. Dans la direction d'envergure 20 en allant du centre vers l'extérieur, il est ainsi prévu successivement l'enceinte primaire Ep puis les compartiments C₁, Cᵢ, Cᵢ₊₁, C_{J} et C_{J+1}, avec le nombre J correspondant à un entier supérieur ou égal à 1. Tout comme l'enceinte primaire Ep, chaque compartiment est délimité vers le haut et vers le bas par l'enveloppe extérieure souple. Latéralement, ces mêmes compartiments sont délimités par des parois élastiques de préférence réalisées dans un matériau élastomère, plus souple que le matériau utilisé pour l'enveloppe extérieure 2. En outre, chaque compartiment s'étend de préférence sur toute la largeur de l'aile, selon l'axe longitudinal 8.

Plus précisément, l'enceinte primaire Ep est délimitée par une paroi élastique P₁ séparant cette enceinte d'un compartiment C₁. Celui-ci présente quant à lui une paroi élastique Pᵢ séparant le compartiment C₁ d'un compartiment Cᵢ. De manière analogue, ce compartiment Cᵢ présente une paroi élastique Pᵢ₊₁ séparant le compartiment Cᵢ d'un compartiment Cᵢ₊₁, et ainsi de suite jusqu'à une paroi élastique P_{J+1} séparant un compartiment C_{J} d'un compartiment C_{J+1}. Comme évoqué précédemment, J est supérieur ou égal à 1, mais le nombre total de compartiments est préférentiellement supérieur à 2, par exemple compris entre 2 et 15. Comme cela ressortira de ce qui suit, chaque paroi élastique doit être suffisamment déformable afin de pouvoir se plaquer contre ses parois directement adjacentes. Par conséquent, le nombre total de compartiments dépend en particulier de l'allongement élastique maximal du matériau choisi pour constituer ces parois en forme de membranes. Il dépend également de la nature du vol du dirigeable hybride, puisque si les missions envisagées pour celui-ci comprennent des variations d'altitude relativement faibles ou importantes, le nombre de compartiments sera respectivement réduit ou augmenté. En effet, le gaz porteur G est censé pénétrer successivement dans les différents compartiments pour accompagner sa dilatation avec l'altitude, sans être relâché dans l'atmosphère.

Le dirigeable hydride comporte par ailleurs des moyens de communication Vᵢ entre chaque compartiment Cᵢ et son compartiment Cᵢ₊₁ adjacent. Dans ce premier mode de réalisation préféré, les moyens de communication Vᵢ sont agencés sur leurs parois élastiques associées Pᵢ, et prennent de préférence chacun la forme d'une électrovanne. De plus, il est prévu une électrovanne de sortie d'air Vₑₓₜ associée au compartiment C_{J+1}, cette électrovanne étant configurée pour interdire / autoriser une communication d'air entre le compartiment C_{J+1} et l'extérieur du dirigeable.

L'ensemble de ces électrovannes Vᵢ, Vₑₓₜ sont commandées par des moyens de commande 22 embarqués sur le dirigeable, ou permettant la commande à distance de ce dirigeable.

Dans un état au sol tel que représenté schématiquement sur la figure 3, le gaz porteur G présente un volume réduit confiné dans l'enceinte primaire Ep, tandis que les compartiments sont remplis d'air. Dans le cas d'un vol à faible altitude au cours duquel la dilatation du gaz porteur sera mesurée, le gaz porteur G peut également être introduit dans plusieurs compartiments adjacents à l'enceinte primaire Ep, dans le but d'accentuer la portance aérostatique. Dans tous les cas, que ce soit en au sol ou en vol, la forme des demi-ailes est maintenue au moins en partie par l'air et le gaz porteur remplissant les compartiments ainsi que l'enceinte primaire. De plus, la forme et la disposition des compartiments sont telles que les efforts en tension dans les parois élastiques, issus des différences de pressions entre les compartiments, sont équilibrés par les efforts en tension de l'enveloppe extérieure souple issus de la pression aérodynamique externe et de la pression interne d'air / de gaz porteur, et par les efforts engendrés par la flexion de l'aile.

Enfin, le dirigeable hybride comporte des moyens 24 d'aide à l'introduction d'air dans le compartiment C_{J+1}, utiles lors d'une phase descendante du dirigeable hybride au cours de laquelle le gaz porteur se rétracte avec la perte d'altitude. Ces moyens 24 peuvent prendre la forme d'une simple pompe, de faible puissance, ou bien il peut s'agir d'un circuit d'air permettant de prélever et d'acheminer de l'air extérieur sous pression, par exemple à l'aide d'un système d'écope. Le prélèvement d'air sous pression peut également être réalisé en aval du flux d'air de poussée généré par les moteurs.

Il va à présent être décrit le principe de fonctionnement de l'invention en référence à la figure 3, avant de détailler ce principe avec des exemples plus spécifiques représentés sur les figures suivantes.

L'une des particularités de l'invention réside dans la gestion d'une phase ascendante du dirigeable, au cours de laquelle les moyens de commande 22 sont configurés de la manière suivante :
(a) lorsque le gaz porteur G est retenu par l'une des parois Pᵢ, il est maintenu les moyens de communication Vᵢ en configuration fermée de sorte que le gaz porteur, se dilatant avec l'altitude, exerce sur la paroi Pᵢ une pression capable d'engendrer une déformation élastique de la paroi Pᵢ d'une position nominale à une position de déformation maximale dans laquelle elle se plaque contre la paroi Pᵢ₊₁ en réduisant le volume du compartiment Cᵢ sensiblement à néant, grâce à une évacuation de l'air initialement prévu dans ce compartiment Cᵢ ;
(b) lorsque la paroi Pᵢ se trouve en position de déformation maximale, les moyens de communication Vᵢ sont ouverts de sorte que la paroi Pᵢ retrouve sa position nominale, par rééquilibrage automatique des pressions du gaz porteur de part et d'autre de cette paroi Pᵢ ;
(c) puis le cas échéant, lors de la poursuite de la phase ascendante et après le retour de la paroi Pᵢ en position nominale, les actions (a) et (b) sont réitérées pour la paroi Pᵢ₊₁ autant de fois que nécessaire tant que i reste inférieur ou égal à J.

De cette manière, l'invention permet d'accompagner astucieusement l'accroissement de volume du gaz porteur, résultant de sa dilatation provoquée par la montée en altitude. Un principe inverse sensiblement analogue est prévu pour accompagner la rétractation de gaz porteur durant les phases de descente, comme cela sera détaillé ci-après avec les exemples spécifiques.

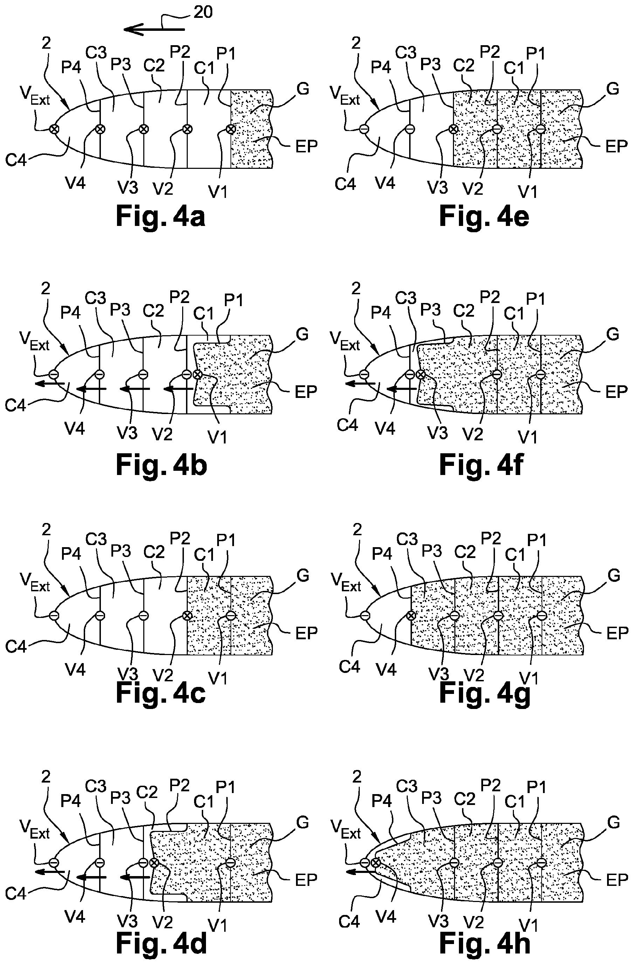

Tout d'abord en référence aux figures 4a à 4h, il est représenté le comportement interne de l'aile au cours d'une phase ascendante, en partant du sol. Cet exemple est basé sur la conception du premier mode de réalisation préféré de l'invention. De façon arbitraire et dans le but de limiter la longueur de la description, le nombre de compartiments a été restreint à quatre, ce qui correspond au cas où le nombre J précité est égal à 3.

La configuration au sol est celle montrée sur la figure 4a, dans laquelle les quatre compartiments C₁ à C₄ sont remplis d'air, et l'enceinte primaire Ep remplie de gaz porteur G. Toutes les parois élastiques P₁ à P₄ sont en position nominale, à savoir non déformée ou peu déformée, et adoptant une forme verticale plane.

Lorsque débute la phase ascendante, les électrovannes V₂ à V₄ sont en configuration ouverte, de même que l'électrovanne de sortie d'air Vₑₓₜ comme cela a été représenté sur la figure 4b. Seule l'électrovanne V₁ est maintenue en configuration fermée, de sorte que sous l'effet de la dilatation du gaz porteur G dans l'enceinte primaire Ep, la paroi P₁ qui délimite cette enceinte se déforme élastiquement jusqu'à une position de déformation maximale montrée sur cette figure 4b. Dans cette position de déformation maximale, la paroi P₁ se plaque contre l'enveloppe extérieure 2 ainsi que contre la paroi élastique P₂, de telle sorte que le volume du compartiment C₁ est sensiblement réduit à néant. Cela est rendu possible par l'évacuation de l'air contenu dans le compartiment C₁, cet air étant en effet chassé vers le compartiment C₂ par l'électrovanne ouverte V₂. Néanmoins, une très légère surpression est conservée pour assurer la forme aérodynamique, mais celle-ci est limitée/contrôlée. Toutes les électrovannes situées en aval sont ouvertes et permettent ainsi à cet air de transiter par le compartiment C₃ puis par le compartiment C₄, avant d'être expulsé en dehors de l'aile dans l'atmosphère. Le mouvement de l'air est schématisé par les flèches sur la figure 4b.

Lorsque la paroi P₁ se trouve en position de déformation maximale, l'électrovanne V₂ est basculée en configuration fermée tandis que l'électrovanne V₁ est ré-ouverte. La paroi P₁ retrouve alors sa position nominale montrée sur la figure 4c, par rééquilibrage automatique des pressions du gaz porteur G de part et d'autre de cette paroi P₁.

Ensuite, alors que la phase ascendante se poursuit, les électrovannes V₃ et V₄ sont en configuration ouverte, de même que l'électrovanne de sortie d'air Vₑₓₜ et l'électrovanne V₁, comme cela a été représenté sur la figure 4d. Seule l'électrovanne V₂ est maintenue en configuration fermée, de sorte que sous l'effet de la dilatation du gaz porteur G dans le compartiment C₁, la paroi P₂ qui délimite ce compartiment se déforme élastiquement jusqu'à une position de déformation maximale montrée sur cette figure 4d. Dans cette position de déformation maximale, la paroi P₂ se plaque contre l'enveloppe extérieure 2 ainsi que contre la paroi élastique P₃, de telle sorte que le volume du compartiment C₂ est sensiblement réduit à néant. Cela est rendu possible par l'évacuation de l'air contenu dans le compartiment C₂, cet air étant en effet chassé vers compartiment C₃ par l'électrovanne ouverte V₃. Néanmoins, une très légère surpression est conservée pour assurer la forme aérodynamique, mais celle-ci est limitée/contrôlée. Toutes les électrovannes situées en aval sont ouvertes et permettent ainsi à cet air de transiter par le compartiment C₄, avant d'être expulsé en dehors de l'aile dans l'atmosphère. Le mouvement de l'air est schématisé par les flèches sur la figure 4d. Sur cette figure, la paroi élastique P₁ a été représentée dans sa position nominale non déformée. Cependant, elle peut en réalité subir une légère déformation provoquée par le gaz porteur G dans l'enceinte primaire Ep, même si celle-ci communique avec le compartiment C₁ via l'électrovanne ouverte V₁.

Lorsque la paroi P₂ se trouve en position de déformation maximale, l'électrovanne V₃ est basculée en configuration fermée tandis que l'électrovanne V₂ est ré-ouverte. La paroi P₂ retrouve alors sa position nominale montrée sur la figure 4e, par rééquilibrage automatique des pressions du gaz porteur G de part et d'autre de cette paroi P₂.

Lors de la poursuite de la phase ascendante, l'électrovanne V₄ est en configuration ouverte, de même que l'électrovanne de sortie d'air Vₑₓₜ ainsi que les électrovannes V₁ et V₂, comme cela a été représenté sur la figure 4f. Seule l'électrovanne V₃ est maintenue en configuration fermée, de sorte que sous l'effet de la dilatation du gaz porteur G dans le compartiment C₂, la paroi P₃ qui délimite ce compartiment se déforme élastiquement jusqu'à une position de déformation maximale montrée sur cette figure 4e. Dans cette position de déformation maximale, la paroi P₃ se plaque contre l'enveloppe extérieure 2 ainsi que contre la paroi élastique P₄, de telle sorte que le volume du compartiment C₃ est sensiblement réduit à néant. Cela est rendu possible par l'évacuation de l'air contenu dans le compartiment C₃, cet air étant en effet chassé vers compartiment C₄ par l'électrovanne ouverte V₄. Néanmoins, une très légère surpression est conservée pour assurer la forme aérodynamique, mais celle-ci est limitée/contrôlée. L'air peut ainsi être expulsé en dehors de l'aile dans l'atmosphère. Le mouvement de l'air est schématisé par les flèches sur la figure 4f. Sur cette figure, les parois élastiques P₁ et P₂ ont été représentées dans leur position nominale non déformée. Cependant, elles peuvent en réalité subir une légère déformation provoquée par le gaz porteur G dans l'enceinte primaire Ep et dans le premier compartiment C₁.

Lorsque la paroi P₃ se trouve en position de déformation maximale, l'électrovanne V₄ est basculée en configuration fermée tandis que l'électrovanne V₃ est ré-ouverte. La paroi P₂ retrouve alors sa position nominale montrée sur la figure 4g, par rééquilibrage automatique des pressions du gaz porteur G de part et d'autre de cette paroi P₃.

Lors de la fin de la phase ascendante, l'électrovanne de sortie d'air Vₑₓₜ est en configuration ouverte, de même que les électrovannes V₁ à V₃, comme cela a été représenté sur la figure 4h. Seule l'électrovanne V₄ est maintenue en configuration fermée, de sorte que sous l'effet de la dilatation du gaz porteur G dans le compartiment C₃, la paroi P₄ qui délimite ce compartiment se déforme élastiquement jusqu'à une position de déformation maximale montrée sur cette figure 4h. Dans cette position de déformation maximale, la paroi P₃ se plaque contre l'enveloppe extérieure 2, de telle sorte que le volume du compartiment C₄ est sensiblement réduit à néant. Cela est rendu possible par l'évacuation de l'air contenu dans le compartiment C₄, cet air étant en effet expulsé en dehors de l'aile par l'électrovanne de sortie d'air Vₑₓₜ. Le mouvement de l'air est schématisé par la flèche sur la figure 4h. Sur cette figure, les parois élastiques P₁ à P₃ ont été représentées dans leur position nominale non déformée. Cependant, elles peuvent en réalité subir une légère déformation provoquée par le gaz porteur G dans l'enceinte primaire Ep et dans les compartiments C₁ et C₂.

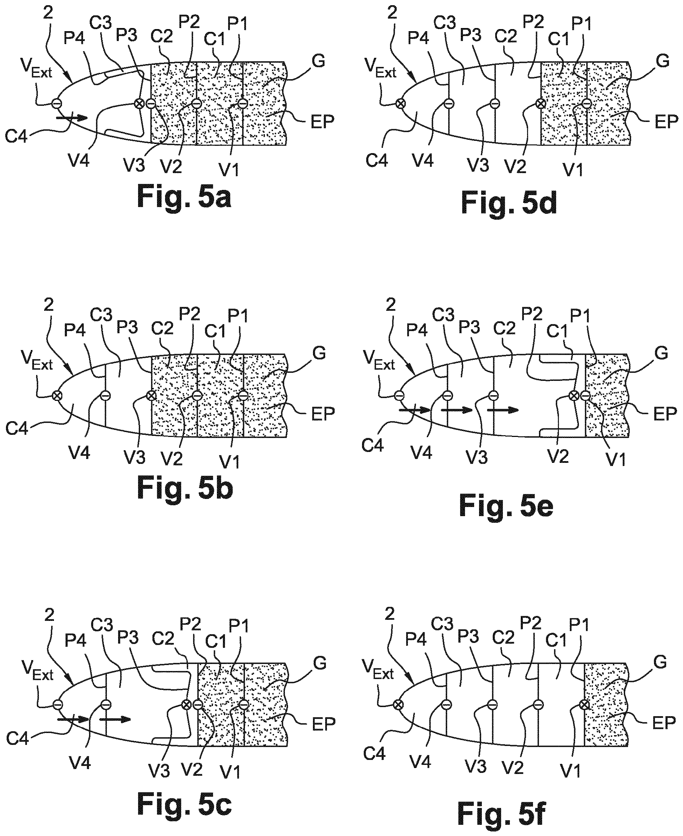

Le compartiment C₄ n'est pas prévu pour être rempli par le gaz porteur, pour éviter par la suite les mélanges entre ce gaz G et l'air. En effet, la phase de descente qui suit la phase ascendante précédemment décrite est réalisée de façon sensiblement inverse, en étant éventuellement assistée par les moyens 24 d'aide à l'introduction d'air dans le compartiment C₄. Cette phase de descente va à présent être décrite en référence aux figures 5a à 5f.

Les électrovannes sont dans les mêmes configurations que celles de la figure 4h, en particulier l'électrovanne V₄ qui adopte sa configuration fermée. Sous l'effet de la perte d'altitude, le gaz porteur G se rétracte en même temps que de l'air extérieur pénètre dans le compartiment C₄, via l'électrovanne Vₑₓₜ. Cela conduit la paroi P₄ à retrouver sa position nominale, puis à se déformer dans le sens inverse dans la direction de la paroi P₃. La paroi P₄ qui délimite le compartiment C₃ se déforme élastiquement jusqu'à une position de déformation inverse maximale montrée sur cette figure 5a. Dans cette position de déformation inverse maximale, la paroi P₄ se plaque contre l'enveloppe extérieure 2 et la paroi P₃, de telle sorte que le volume du compartiment C₃ est sensiblement réduit à néant. Cela est donc rendu possible par l'introduction de l'air extérieur dans le compartiment C₄, via l'électrovanne de sortie d'air Vₑₓₜ. Le mouvement de l'air est schématisé par la flèche sur la figure 5a.

Lorsque la paroi P₄ se trouve en position de déformation inverse maximale, l'électrovanne V₃ est basculée en configuration fermée tandis que l'électrovanne V₄ est ré-ouverte. La paroi P₄ retrouve alors sa position nominale montrée sur la figure 5b, par rééquilibrage automatique des pressions de l'air de part et d'autre de cette paroi P₄. Lors de ce rééquilibrage, l'électrovanne de sortie d'air Vₑₓₜ peut indifféremment être en configuration fermée ou ouverte.

Lorsque la descente se poursuit, sous l'effet de la perte d'altitude, le gaz porteur G se rétracte en même temps que de l'air extérieur pénètre dans le compartiment C₄ via l'électrovanne Vₑₓₜ, puis dans le compartiment C₃ via l'électrovanne V₄ en configuration ouverte. Cela conduit la paroi P₃ à retrouver sa position nominale, puis à se déformer dans le sens inverse dans la direction de la paroi P₂. La paroi P₃ qui délimite le compartiment C₂ se déforme élastiquement jusqu'à une position de déformation inverse maximale montrée sur cette figure 5c. Dans cette position de déformation inverse maximale, la paroi P₃ se plaque contre l'enveloppe extérieure 2 et la paroi P₂, de telle sorte que le volume du compartiment C₂ est sensiblement réduit à néant. Cela est donc rendu possible par l'introduction de l'air extérieur dans les compartiments C₄ et C₃, comme le montrent les flèches sur la figure 5c.

Lorsque la paroi P₃ se trouve en position de déformation inverse maximale, l'électrovanne V₂ est basculée en configuration fermée tandis que l'électrovanne V₃ est ré-ouverte. La paroi P₃ retrouve alors sa position nominale montrée sur la figure 5d, par rééquilibrage automatique des pressions de l'air de part et d'autre de cette paroi P₃. Lors de ce rééquilibrage, l'électrovanne de sortie d'air Vₑₓₜ peut indifféremment être en configuration fermée ou ouverte, tout comme l'électrovanne V₄.

Lorsque la descente se poursuit, toujours sous l'effet de la perte d'altitude, le gaz porteur G se rétracte en même temps que de l'air extérieur pénètre dans le compartiment C₄ via l'électrovanne Vₑₓₜ, puis dans les compartiments C₃ et C₂ via les électrovannes V₄ et V₃ en configuration ouverte. Cela conduit la paroi P₂ à retrouver sa position nominale, puis à se déformer dans le sens inverse dans la direction de la paroi P₁. La paroi P₂ qui délimite le compartiment C₁ se déforme élastiquement jusqu'à une position de déformation inverse maximale montrée sur cette figure 5e. Dans cette position de déformation inverse maximale, la paroi P₂ se plaque contre l'enveloppe extérieure 2 et la paroi P₁, de telle sorte que le volume du compartiment C₁ est sensiblement réduit à néant. Cela est donc rendu possible par l'introduction de l'air extérieur dans les compartiments C₄, C₃, C₂, comme le montrent les flèches sur la figure 5e.

Lorsque la paroi P₂ se trouve en position de déformation inverse maximale, l'électrovanne V₁ est basculée en configuration fermée tandis que l'électrovanne V₂ est ré-ouverte. La paroi P₂ retrouve alors sa position nominale montrée sur la figure 5f, par rééquilibrage automatique des pressions de l'air de part et d'autre de cette paroi P₂. Lors de ce rééquilibrage, l'électrovanne de sortie d'air Vₑₓₜ peut indifféremment être en configuration fermée ou ouverte, tout comme les électrovannes V₃ et V₄.

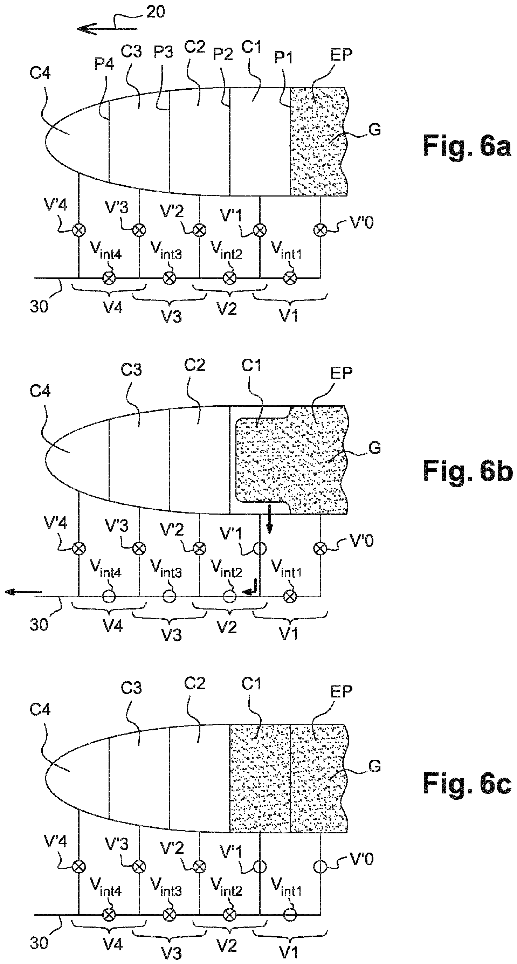

Les figures 6a à 6h montrent le principe de fonctionnement de l'invention lors d'une phase ascendante du dirigeable se présentant sous la forme d'un second mode de réalisation préféré de l'invention. Ce second mode diffère du premier mode essentiellement par la conception des moyens de communication Vᵢ, qui sont ici agencés en dehors des parois élastiques.

En effet, il est ici prévu un conduit de fluide 30 dont une extrémité proche du centre du dirigeable est obturée, et dont l'autre extrémité débouche à l'extérieur du dirigeable, dans l'atmosphère. Ce conduit 30 est préférentiellement droit, et orienté selon la direction d'envergure 20.

De plus, les moyens de communication Vᵢ associés à chaque paroi élastique ne sont plus de simples électrovannes agencées sur les parois, mais sont constitués par un ensemble de trois électrovannes parmi lesquelles :
- une électrovanne intermédiaire V_{int i} agencée sur le conduit de fluide ;
- une électrovanne V'ᵢ₋₁ d'une part raccordée en amont de l'électrovanne intermédiaire V_{int i} par rapport à un sens d'écoulement allant vers l'extérieur du dirigeable, et d'autre part communiquant avec le compartiment Cᵢ₋₁ ou l'enceinte primaire pour i=1 ; et
- une électrovanne V'ᵢ d'une part raccordée en aval de l'électrovanne intermédiaire V_{int i} par rapport à un sens d'écoulement allant vers l'extérieur du dirigeable, et d'autre part communiquant avec le compartiment Cᵢ.

En d'autres termes, chaque électrovanne V'ᵢ appartient simultanément aux moyens Vᵢ ainsi qu'aux moyens Vᵢ₊₁.

En pratique, sur l'exemple spécifique des figures 6a à 6h comprenant quatre compartiments C₁ à C₄, la configuration au sol est celle montrée sur la figure 6a, dans laquelle ces compartiments C₁ à C₄ sont remplis d'air, et l'enceinte primaire Ep remplie de gaz porteur G. Toutes les parois élastiques P₁ à P₄ sont en position nominale, à savoir non déformée ou peu déformée, et adoptant idéalement une forme verticale plane.

Lorsque débute la phase ascendante, les électrovannes intermédiaires V_{int 2} à V_{int 4} sont en configuration ouverte, comme cela a été représenté sur la figure 6b. Seuls les moyens V₁ sont maintenus en configuration fermée, par fermeture de l'électrovanne V'₀ et de l'électrovanne intermédiaire V_{int 1}. Par conséquent, sous l'effet de la dilatation du gaz porteur G dans l'enceinte primaire Ep, la paroi P₁ qui délimite cette enceinte se déforme élastiquement jusqu'à une position de déformation maximale montrée sur cette figure 6b. Dans cette position de déformation maximale, la paroi P₁ se plaque contre l'enveloppe extérieure 2 ainsi que contre la paroi élastique P₂, de telle sorte que le volume du compartiment C₁ est sensiblement réduit à néant. Cela est rendu possible par l'évacuation de l'air contenu dans le compartiment C₁, cet air étant en effet chassé vers le conduit de fluide 30 par l'électrovanne ouverte V'₁. Sur la figure 6b, les flèches représentent schématiquement l'expulsion de l'air en dehors du compartiment C₁ et du conduit 30.

Lorsque la paroi P₁ se trouve en position de déformation maximale, l'électrovanne intermédiaire V_{int 2} est basculée en configuration fermée tandis que les électrovannes V'₀ et V_{int 1} sont ré-ouvertes afin de faire basculer l'ensemble des moyens V₁ en configuration ouverte. La paroi P₁ retrouve alors sa position nominale montrée sur la figure 6c, par rééquilibrage automatique des pressions du gaz porteur G de part et d'autre de cette paroi P₁.

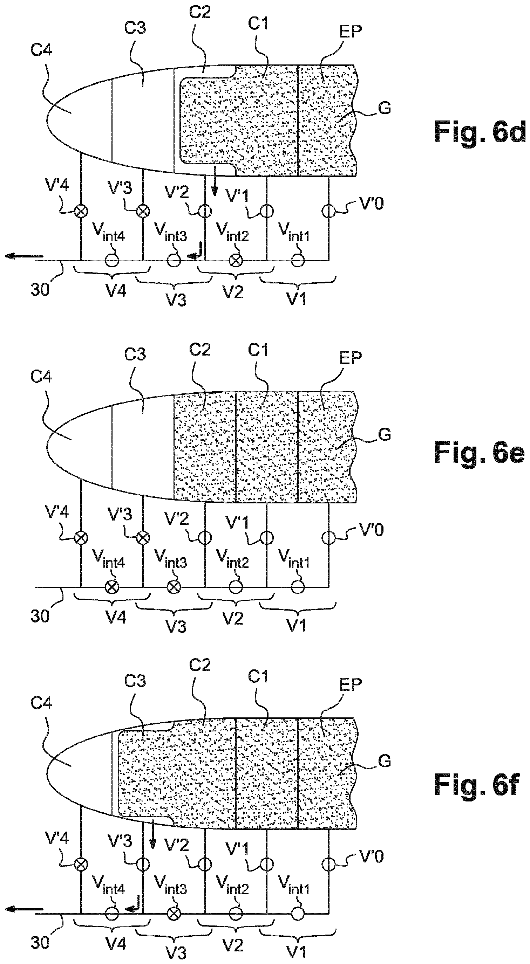

Ensuite, alors que la phase ascendante se poursuit, les électrovannes intermédiaires V_{int 3} et V_{int 4} restent en configuration ouverte, comme cela a été représenté sur la figure 6d. Les moyens V₁ sont maintenus en configuration ouverte, et seuls les moyens V₂ sont maintenus en configuration fermée, par fermeture de l'électrovanne intermédiaire V_{int 2}. Par conséquent, sous l'effet de la dilatation du gaz porteur G dans le compartiment C₁, la paroi P₂ qui délimite ce compartiment se déforme élastiquement jusqu'à une position de déformation maximale montrée sur cette figure 6d. Dans cette position de déformation maximale, la paroi P₂ se plaque contre l'enveloppe extérieure 2 ainsi que contre la paroi élastique P₃, de telle sorte que le volume du compartiment C₂ est sensiblement réduit à néant. Cela est rendu possible par l'évacuation de l'air contenu dans le compartiment C₂, cet air étant en effet chassé vers le conduit de fluide 30 par l'électrovanne ouverte V'₂. Sur la figure 6d, les flèches représentent schématiquement l'expulsion de l'air en dehors du compartiment C₂ et du conduit 30.

Lorsque la paroi P₂ se trouve en position de déformation maximale, l'électrovanne intermédiaire V_{int 3} est basculée en configuration fermée tandis que l'électrovanne intermédiaire V_{int 2} est ré-ouverte afin de faire basculer l'ensemble des moyens V₂ en configuration ouverte. La paroi P₁ retrouve alors sa position nominale montrée sur la figure 6e, par rééquilibrage automatique des pressions du gaz porteur G de part et d'autre de cette paroi P₂.

Lorsque la phase ascendante se poursuit, l'électrovanne intermédiaire V_{int 4} reste en configuration ouverte, comme cela a été représenté sur la figure 6f. Les moyens V₁ et V₂ sont maintenus en configuration ouverte, et seuls les moyens V₃ sont maintenus en configuration fermée, par fermeture de l'électrovanne intermédiaire V_{int 3}. Par conséquent, sous l'effet de la dilatation du gaz porteur G dans le compartiment C₂, la paroi P₃ qui délimite ce compartiment se déforme élastiquement jusqu'à une position de déformation maximale montrée sur cette figure 6f. Dans cette position de déformation maximale, la paroi P₃ se plaque contre l'enveloppe extérieure 2 ainsi que contre la paroi élastique P₄, de telle sorte que le volume du compartiment C₃ est sensiblement réduit à néant. Cela est rendu possible par l'évacuation de l'air contenu dans le compartiment C₃, cet air étant en effet chassé vers le conduit de fluide 30 par l'électrovanne ouverte V'₃. Sur la figure 6f, les flèches représentent schématiquement l'expulsion de l'air en dehors du compartiment C₃ et du conduit 30.

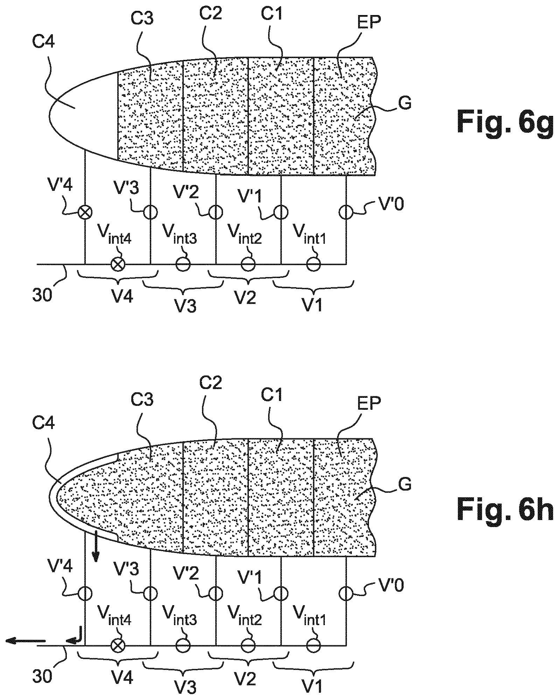

Lorsque la paroi P₃ se trouve en position de déformation maximale, l'électrovanne intermédiaire V_{int 4} est basculée en configuration fermée tandis que l'électrovanne intermédiaire Vᵢₙₜ est ré-ouverte, afin de faire basculer l'ensemble des moyens V₃ en configuration ouverte. La paroi P₃ retrouve alors sa position nominale montrée sur la figure 6g, par rééquilibrage automatique des pressions du gaz porteur G de part et d'autre de cette paroi P₃.

Lors de la fin de la phase ascendante, les moyens V₁ à V₃ sont maintenus en configuration ouverte comme cela a été représenté sur la figure 6h. Seuls les moyens V₄ sont maintenus en configuration fermée, par fermeture de l'électrovanne intermédiaire V_{int 4}. Par conséquent, sous l'effet de la dilatation du gaz porteur G dans le compartiment C₃, la paroi P₄ qui délimite ce compartiment se déforme élastiquement jusqu'à une position de déformation maximale montrée sur cette figure 6h. Dans cette position de déformation maximale, la paroi P₄ se plaque contre l'enveloppe extérieure 2, de telle sorte que le volume du compartiment C₄ est sensiblement réduit à néant. Cela est rendu possible par l'évacuation de l'air contenu dans le compartiment C₄, cet air étant en effet chassé vers le conduit de fluide 30 par l'électrovanne ouverte V'₄. Sur la figure 6h, les flèches représentent schématiquement l'expulsion de l'air en dehors du compartiment C₄ et du conduit 30.

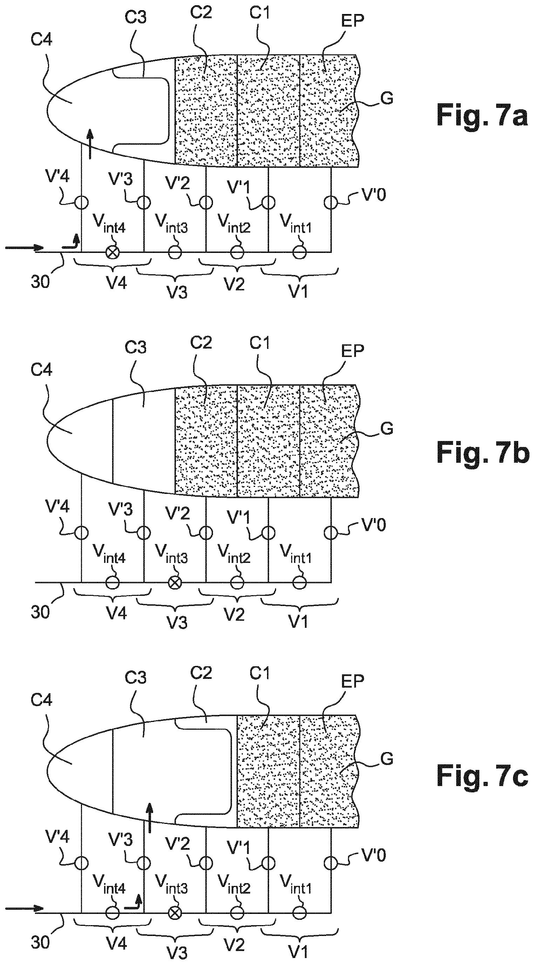

Dans ce second mode de réalisation préféré de l'invention, le compartiment C₄ n'est pas non plus prévu pour être rempli par le gaz porteur, pour éviter par la suite les mélanges entre ce gaz G et l'air. En effet, la phase de descente qui suit la phase ascendante précédemment décrite est réalisée de façon sensiblement inverse, en étant éventuellement assistée par les moyens 24 d'aide à l'introduction d'air dans les différents compartiments. Cette phase de descente va à présent être décrite en référence aux figures 7a à 7f.

Les moyens de communication Vᵢ sont dans les mêmes configurations que celles de la figure 6h, en particulier les moyens V₄ qui adoptent leur configuration fermée par fermeture de l'électrovanne V_{int 4}.

Sous l'effet de la perte d'altitude, le gaz porteur G se rétracte en même temps que de l'air extérieur pénètre dans le compartiment C₄, via l'électrovanne ouverte V'₄, en étant éventuellement assistée par les moyens 24 d'aide à l'introduction d'air dans le compartiment C₄. Cela conduit la paroi P₄ à retrouver sa position nominale, puis à se déformer dans le sens inverse dans la direction de la paroi P₃. La paroi P₄ qui délimite le compartiment C₃ se déforme élastiquement jusqu'à une position de déformation inverse maximale montrée sur cette figure 7a. Dans cette position de déformation inverse maximale, la paroi P₄ se plaque contre l'enveloppe extérieure 2 et la paroi P₃, de telle sorte que le volume du compartiment C₃ est sensiblement réduit à néant. Cela est donc rendu possible par l'introduction de l'air extérieur dans le compartiment C₄, via l'électrovanne V'₄. Le mouvement de l'air est schématisé par la flèche sur la figure 7a.

Lorsque la paroi P₄ se trouve en position de déformation inverse maximale, l'électrovanne intermédiaire V_{int 3} est basculée en configuration fermée tandis que les moyens V₄ sont basculés en configuration ouverte par ouverture de l'électrovanne intermédiaire V_{int 4}. La paroi P₄ retrouve alors sa position nominale montrée sur la figure 7b, par rééquilibrage automatique des pressions de l'air de part et d'autre de cette paroi P₄. Lors de ce rééquilibrage, les moyens V₁ et V₂ sont préférentiellement en configuration ouverte.

Lorsque la descente se poursuit, le gaz porteur G se rétracte en même temps que de l'air extérieur pénètre dans le compartiment C₃, via l'électrovanne ouverte V'₃. Cela conduit la paroi P₃ à retrouver sa position nominale, puis à se déformer dans le sens inverse dans la direction de la paroi P₂. La paroi P₃ qui délimite le compartiment C₂ se déforme élastiquement jusqu'à une position de déformation inverse maximale montrée sur cette figure 7c. Dans cette position de déformation inverse maximale, la paroi P₃ se plaque contre l'enveloppe extérieure 2 et la paroi P₂, de telle sorte que le volume du compartiment C₂ est sensiblement réduit à néant. Cela est rendu possible par l'introduction de l'air extérieur dans le compartiment C₃, via l'électrovanne V'₃. Le mouvement de l'air est schématisé par les flèches sur la figure 7c.

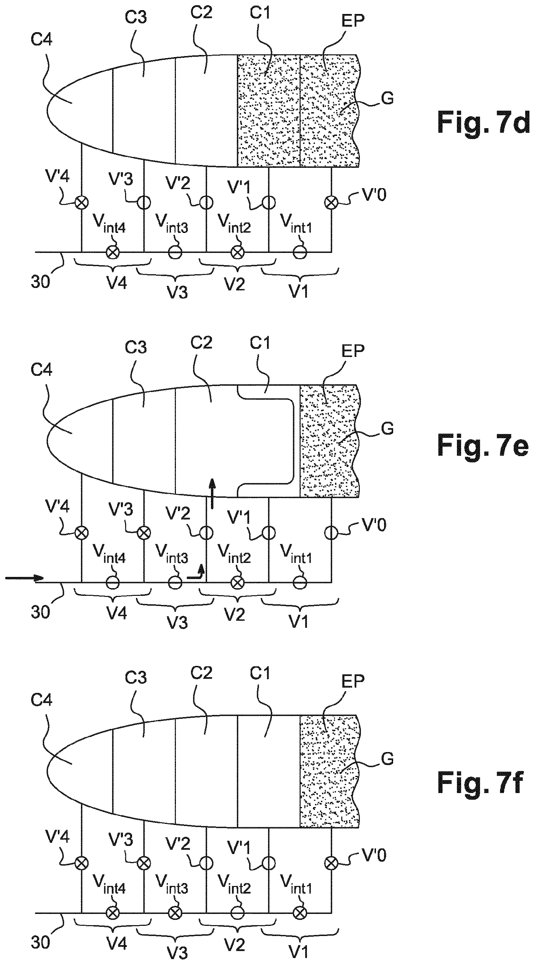

Lorsque la paroi P₃ se trouve en position de déformation inverse maximale, l'électrovanne intermédiaire V_{int 2} est basculée en configuration fermée tandis que les moyens V₃ sont basculés en configuration ouverte, par ouverture de l'électrovanne intermédiaire V_{int 3}. La paroi P₃ retrouve alors sa position nominale montrée sur la figure 7d, par rééquilibrage automatique des pressions de l'air de part et d'autre de cette paroi P₃. Lors de ce rééquilibrage, les moyens V₁ sont préférentiellement en configuration ouverte.

Lors de la fin de la descente, le gaz porteur G se rétracte en même temps que de l'air extérieur pénètre dans le compartiment C₂, via l'électrovanne ouverte V'₂. Cela conduit la paroi P₂ à retrouver sa position nominale, puis à se déformer dans le sens inverse dans la direction de la paroi P₁. La paroi P₂ qui délimite le compartiment C₁ se déforme élastiquement jusqu'à une position de déformation inverse maximale montrée sur cette figure 7e. Dans cette position de déformation inverse maximale, la paroi P₂ se plaque contre l'enveloppe extérieure 2 et la paroi P₁, de telle sorte que le volume du compartiment C₁ est sensiblement réduit à néant. Cela est rendu possible par l'introduction de l'air extérieur dans le compartiment C₂, via l'électrovanne V'₂. Le mouvement de l'air est schématisé par les flèches sur la figure 7e.

Lorsque la paroi P₂ se trouve en position de déformation inverse maximale, l'électrovanne intermédiaire V_{int 1} est basculée en configuration fermée tandis que les moyens V₂ sont basculés en configuration ouverte, par ouverture de l'électrovanne intermédiaire V_{int 2}. La paroi P₂ retrouve alors sa position nominale montrée sur la figure 7f, par rééquilibrage automatique des pressions de l'air de part et d'autre de cette paroi P₂.

Bien entendu, diverses modifications peuvent être apportées par l'homme du métier à l'invention qui vient d'être décrite, uniquement à titre d'exemples non limitatifs.

## Revendications

1. Dirigeable hybride (1) à portance aérostatique et à portance aérodynamique comprenant :
- des moyens de propulsion (10) ;
- une enveloppe extérieure souple (2) ;
- au moins une enceinte primaire Ep remplie d'un gaz porteur (G),
**caractérisé par** ladite enceinte primaire Ep présentant une paroi élastique P₁ séparant cette enceinte d'un compartiment C₁, ce dernier présentant une paroi élastique Pᵢ séparant le compartiment C₁ d'un compartiment Cᵢ, ce dernier présentant une paroi élastique Pᵢ₊₁ séparant le compartiment Cᵢ d'un compartiment Cᵢ₊₁, et ainsi de suite jusqu'à une paroi élastique P_{J+1} séparant un compartiment C_{J} d'un compartiment C_{J+1} avec J correspondant à un entier supérieur ou égal à 1, chaque compartiment Cᵢ étant également délimité par l'enveloppe extérieure souple ;
- des moyens de communication Vᵢ entre chaque compartiment Cᵢ et son compartiment Cᵢ₊₁ adjacent ;
- des moyens de commande (22) des moyens de communication Vᵢ ;
lesdits moyens de commande (22) étant configurés de manière à :
(a) lors d'une phase ascendante avec le gaz porteur (G) retenu par l'une des parois Pᵢ avec i quelconque entre 1 et J, maintenir les moyens de communication Vᵢ en configuration fermée de sorte que le gaz porteur, se dilatant avec l'altitude, exerce sur la paroi Pᵢ une pression capable d'engendrer une déformation élastique de la paroi Pᵢ d'une position nominale à une position de déformation maximale dans laquelle elle se plaque contre la paroi Pi+ien réduisant le volume du compartiment Cᵢ sensiblement à néant, grâce à une évacuation de l'air initialement prévu dans ce compartiment Cᵢ ;
(b) puis lorsque la paroi Pᵢ se trouve en position de déformation maximale, ouvrir les moyens de communication Vᵢ de sorte que la paroi Pᵢ retrouve sa position nominale, par rééquilibrage automatique des pressions du gaz porteur de part et d'autre de cette paroi Pᵢ ;
(c) puis le cas échéant, lors de la poursuite de la phase ascendante et après le retour de la paroi Pᵢ en position nominale, réitérer les actions (a) et (b) pour la paroi Pᵢ₊₁ autant de fois que nécessaire tant que i reste inférieur ou égal à J.

2. Dirigeable hybride selon la revendication 1, **caractérisé en ce que** lesdits moyens de propulsion comprennent un ou plusieurs moteurs (10), de préférence montés pivotant selon un axe transversal (12) du dirigeable hybride.

3. Dirigeable hybride selon la revendication 1 ou la revendication 2, **caractérisé en ce que** ladite enveloppe extérieure souple (2) définit une aile ou deux demi-ailes (4), dont la forme est maintenue au moins en partie par l'air/ le gaz porteur situé dans l'enceinte primaire Ep et les compartiments Cᵢ.

4. Dirigeable hybride selon l'une quelconque des revendications précédentes, **caractérisé en ce que** ladite enceinte primaire Ep est agencée de façon centrée sur le dirigeable, et **en ce qu'**une série de compartiments Cᵢ s'étend de chaque côté de l'enceinte primaire, selon une direction transversale (20) du dirigeable.

5. Dirigeable hybride selon la revendication précédente, **caractérisé en ce que** les deux séries de compartiments Cᵢ sont agencées symétriquement par rapport à un plan de symétrie (P') du dirigeable.

6. Dirigeable hybride selon l'une quelconque des revendications précédentes, **caractérisé en ce que** les moyens de communication Vᵢ comprennent, pour chaque paroi élastique Pᵢ, une électrovanne agencée sur la paroi élastique Pᵢ associée.

7. Dirigeable hybride selon la revendication précédente, **caractérisé en ce qu'**il comporte également une électrovanne de sortie d'air Vₑₓₜ associée au compartiment C_{J+1}, et configurée pour interdire / autoriser une communication d'air entre le compartiment C_{J+1} et l'extérieur du dirigeable.

8. Dirigeable hybride selon la revendication précédente, **caractérisé en ce que** lesdits moyens de commande (22) sont configurés pour que lors d'une phase ascendante, avec les moyens de communication Vᵢ en configuration fermée de sorte que le gaz porteur (G) exerce sur la paroi Pᵢ une pression capable d'engendrer une déformation élastique de la paroi Pᵢ, les moyens de communication Vᵢ₊₁ à V_{J+1} ainsi que ladite électrovanne de sortie d'air Vₑₓₜ soient maintenus en configuration ouverte.

9. Dirigeable hybride selon l'une quelconque des revendications 1 à 6, **caractérisé en ce qu'**il comporte un conduit de fluide (30) débouchant à l'extérieur du dirigeable, et **en ce que** les moyens de communication Vᵢ comprennent, pour chaque paroi élastique Pᵢ pour i allant de 1 à J+1 :
- une électrovanne intermédiaire V_{int i} agencée sur le conduit de fluide (30) ;
- une électrovanne V'ᵢ₋₁ d'une part raccordée en amont de l'électrovanne intermédiaire V_{int i} par rapport à un sens d'écoulement allant vers l'extérieur du dirigeable, et d'autre part communiquant avec le compartiment Cᵢ₋₁ ou l'enceinte primaire pour i=1 ; et
- une électrovanne V'ᵢ d'une part raccordée en aval de l'électrovanne intermédiaire V_{int i} par rapport à un sens d'écoulement allant vers l'extérieur du dirigeable, et d'autre part communiquant avec le compartiment Cᵢ.

10. Dirigeable hybride selon la revendication précédente, **caractérisé en ce que** lesdits moyens de commande (22) sont configurés pour que lors d'une phase ascendante, le maintien en configuration fermée des moyens de communication Vᵢ, commandé pour que le gaz porteur (G) exerce sur la paroi Pᵢ une pression capable d'engendrer une déformation élastique de la paroi Pᵢ, est assuré en maintenant en configuration fermée ladite électrovanne V'ᵢ₋₁ et/ou ladite électrovanne intermédiaire V_{int i}, et en maintenant ladite électrovanne V'ᵢ en configuration ouverte.

11. Dirigeable hybride selon la revendication précédente, **caractérisé en ce que** lesdits moyens de commande (22) sont configurés pour que lors d'une phase ascendante, avec les moyens de communication Vᵢ en configuration fermée de sorte que le gaz porteur exerce sur la paroi Pᵢ une pression capable d'engendrer une déformation élastique de la paroi Pᵢ, les électrovannes intermédiaires V_{int i+1} à V_{int J+1} soient maintenues en configuration ouverte.

12. Dirigeable hybride selon l'une quelconque des revendications précédentes, **caractérisé en ce qu'**il comporte des moyens (24) d'aide à l'introduction d'air dans le compartiment C_{J+1}, lors d'une phase descendante du dirigeable hybride au cours de laquelle le gaz porteur (G) se rétracte avec la perte d'altitude.

13. Dirigeable hybride selon l'une quelconque des revendications précédentes, **caractérisé en ce que** ladite enveloppe extérieure souple (2) est réalisée dans un matériau moins souple que celui desdites parois élastiques.

14. Dirigeable hybride selon l'une quelconque des revendications précédentes, **caractérisé en ce que** lesdites parois élastiques sont réalisées dans un matériau élastomère.

15. Procédé de commande du dirigeable hybride (1) selon l'une quelconque des revendications précédentes, **caractérisé en ce qu'**il est mis en oeuvre de sorte que :
(a) lors d'une phase ascendante avec le gaz porteur retenu par l'une des parois Pᵢ avec i quelconque entre 1 et J, les moyens de communication Vᵢ sont maintenus en configuration fermée de sorte que le gaz porteur (G), se dilatant avec l'altitude, exerce sur la paroi Pᵢ une pression engendrant une déformation élastique de la paroi Pᵢ d'une position nominale à une position de déformation maximale dans laquelle elle se plaque contre la paroi Pᵢ₊₁ en réduisant le volume du compartiment Cᵢ sensiblement à néant, grâce à une évacuation de l'air initialement prévu dans ce compartiment Cᵢ ;
(b) puis lorsque la paroi Pᵢ se trouve en position de déformation maximale, les moyens de communication Vᵢ sont ouverts de sorte que la paroi Pᵢ retrouve sa position nominale, par rééquilibrage automatique des pressions du gaz porteur (G) de part et d'autre de cette paroi Pᵢ ;
(c) puis le cas échéant, lors de la poursuite de la phase ascendante et après le retour de la paroi Pᵢ en position nominale, les actions (a) et (b) sont réitérées pour la paroi Pᵢ₊₁ autant de fois que nécessaire tant que i reste inférieur ou égal à J.

## Patentansprüche

1. Hybridluftschiff (1) mit aerostatischer Hebekraft und aerodynamischer Hebekraft, das Folgendes umfasst:
- Antriebsmittel (10);
- eine flexible Außenhülle (2);
- mindestens einen Primäreinschluss Ep, der mit einem Trägergas (G) gefüllt ist, **dadurch gekennzeichnet, dass** der Primäreinschluss Ep eine elastische Wand P₁ aufweist, die den Einschluss von einem Fach C₁ trennt, wobei dieser Letztere eine elastische Wad Pᵢ aufweist, die das Fach C₁ von einem Fach Cᵢ trennt, wobei dieses Letztere eine elastische Wand Pᵢ₊₁ aufweist, die das Fach Cᵢ von einem Fach Cᵢ₊₁ trennt usw., bis zu einer elastischen Wand P_{J+1,} die ein Fach C_{J} von einem Fach C_{J+1} trennt, wobei J einer Ganzzahl größer oder gleich 1 entspricht, wobei jedes Fach Cᵢ auch von der flexiblen Außenhülle begrenzt ist;
- Mittel zur Verbindung Vᵢ zwischen jedem Fach Cᵢ und seinem benachbarten Fach Cᵢ₊₁;
- Mittel zum Steuern (22) der Verbindungsmittel Vᵢ;
wobei die Steuermittel (22) derart konfiguriert sind, dass:
(a) bei einer aufsteigenden Phase mit dem Trägergas (G), das von einer der Wände Pᵢ zurückgehalten wird, mit i beliebig zwischen 1 und J, die Verbindungsmittel Vᵢ derart in geschlossener Konfiguration gehalten werden, dass das Trägergas, das sich mit der Höhenlage ausdehnt, auf die Wand Pᵢ einen Druck ausübt, der eine elastische Verformung der Wand Pᵢ von einer Nennposition zu einer maximalen Verformungsposition bewirkt, in der sie sich gegen die Wand Pᵢ₊₁ anlegt, indem das Volumen des Fachs Cᵢ dank einer Ableitung der ursprünglich in diesem Fach Cᵢ vorgesehenen Luft im Wesentlichen auf nichts reduziert wird;
(b) dann, wenn sich die Wand Pᵢ in maximaler Verformungsposition befindet, die Verbindungsmittel Vᵢ derart geöffnet werden, dass die Wand Pᵢ ihre Nennposition durch automatisches Ausgleichen der Drücke des Trägergases zu beiden Seiten dieser Wand Pᵢ wieder einnimmt;
(c) dann, gegebenenfalls bei der Fortsetzung der aufsteigenden Phase und nach der Rückkehr der Wand Pᵢ in Nennposition, die Aktionen (a) und (b) für die Wand Pᵢ₊₁ so oft wie erforderlich wiederholt werden, solange i kleiner oder gleich J bleibt.

2. Hybridluftschiff nach Anspruch 1, **dadurch gekennzeichnet, dass** die Antriebsmittel einen oder mehrere Motoren (10), die bevorzugt entlang einer Querachse (12) des Hybridluftschiffs schwenken, umfassen.

3. Hybridluftschiff nach Anspruch 1 oder Anspruch 2, **dadurch gekennzeichnet, dass** die flexible Außenhülle (2) einen Flügel oder zwei Halbflügel (4) bildet, deren Form mindestens zum Teil von der Luft/dem Trägergas, die/das sich in dem Primäreinschluss Ep und den Fächern Cᵢ befindet, aufrechterhalten wird.

4. Hybridluftschiff nach einem der vorhergehenden Ansprüche, **dadurch gekennzeichnet, dass** der Primäreinschluss Ep zentriert auf dem Luftschiff eingerichtet ist, und dass sich eine Reihe von Fächern Cᵢ auf jeder Seite des Primäreinschlusses entlang einer Querrichtung (20) des Luftschiffs erstreckt.

5. Hybridluftschiff nach dem vorhergehenden Anspruch, **dadurch gekennzeichnet, dass** die zwei Reihen von Fächern Cᵢ symmetrisch in Bezug auf eine Symmetrieebene (P') des Luftschiffs eingerichtet sind.

6. Hybridluftschiff nach einem der vorhergehenden Ansprüche, **dadurch gekennzeichnet, dass** die Verbindungsmittel Vᵢ für jede flexible Wand Pᵢ ein Magnetventil, das auf der dazugehörenden flexiblen Wand Pᵢ eingerichtet ist, umfassen.

7. Hybridluftschiff nach dem vorhergehenden Anspruch, **dadurch gekennzeichnet, dass** es auch ein Luftausgangsmagnetventil Vₑₓₜ umfasst, das mit dem Fach C_{J+1} assoziiert und konfiguriert ist, um eine Luftverbindung zwischen dem Fach C_{J+1} und der Außenseite des Luftschiffs zu untersagen / zu gestatten.

8. Hybridluftschiff nach dem vorhergehenden Anspruch, **dadurch gekennzeichnet, dass** die Steuermittel (22) konfiguriert sind, damit bei einer aufsteigenden Phase mit den Verbindungsmitteln Vᵢ in geschlossener Konfiguration, so dass das Trägergas (G) auf die Wand Pᵢ einen Druck ausübt, der fähig ist, eine elastische Verformung der Wand Pᵢ zu bewirken, die Verbindungsmittel Vᵢ₊₁ bis V_{J+1} sowie das Luftausgangsmagnetventil Vₑₓₜ in offener Konfiguration gehalten werden.

9. Hybridluftschiff nach einem der Ansprüche 1 bis 6, **dadurch gekennzeichnet, dass** es eine Fluidleitung (30) umfasst, die aus dem Luftschiff heraus mündet, und dass die Verbindungsmittel Vᵢ für jede flexible Wand Pᵢ für i von 1 bis J+1:
- ein Zwischenmagnetventil V_{int i} umfassen, das auf der Fluidleitung (30) eingerichtet ist,
- ein Magnetventil V'ᵢ₋₁, das einerseits stromaufwärts des Zwischenmagnetventils V_{int i} in Bezug auf eine Fließrichtung angeschlossen ist, die zu der Außenseite des Luftfahrtschiffs geht, und andererseits mit dem Fach Cᵢ₊₁ oder dem Primäreinschluss für i=1 verbunden ist, umfasst, und
- ein Magnetventil V'ᵢ, das einerseits stromabwärts des Zwischenmagnetventils V_{int i} in Bezug auf eine Fließrichtung, die zu der Außenseite des Luftfahrtschiffs geht, angeschlossen ist, und das andererseits mit dem Fach Cᵢ verbunden ist, umfasst.

10. Hybridluftschiff nach dem vorhergehenden Anspruch, **dadurch gekennzeichnet, dass** die Steuermittel (22) konfiguriert sind, damit bei einer aufsteigenden Phase das Aufrechterhalten in geschlossener Konfiguration der Verbindungsmittel Vᵢ, das angeordnet wird, damit das Trägergas (G) auf die Wand Pᵢ einen Druck ausübt, der fähig ist, eine elastische Verformung der Wand Pᵢ zu bewirken, sichergestellt wird, indem das Magnetventil V'ᵢ₋₁ und/oder das Zwischenmagnetventil V_{int i} geschlossen gehalten werden, und indem das Magnetventil V'ᵢ in offener Konfiguration gehalten wird.

11. Hybridluftschiff nach dem vorhergehenden Anspruch, **dadurch gekennzeichnet, dass** die Steuermittel (22) konfiguriert sind, damit bei einer aufsteigenden Phase mit den Verbindungsmitteln Vᵢ in geschlossener Konfiguration, so dass das Trägergas auf die Wand Pᵢ einen Druck ausübt, der fähig ist, eine elastische Verformung der Wand Pᵢ zu bewirken, die Zwischenmagnetventile V_{int i+1} bis V_{int J+1} in offener Konfiguration gehalten werden.

12. Hybridluftschiff nach einem der vorhergehenden Ansprüche, **dadurch gekennzeichnet, dass** es Mittel (24) zum Unterstützen des Einführens von Luft in das Fach C_{J+1} bei einer absteigenden Phase des Hybridluftschiffs, während der sich das Trägergas (G) mit dem Höhenverlust zusammenzieht, umfasst.

13. Hybridluftschiff nach einem der vorhergehenden Ansprüche, **dadurch gekennzeichnet, dass** die flexible Außenhülle (2) aus einem Material hergestellt ist, das nicht so flexibel ist wie das der flexiblen Wände.

14. Hybridluftschiff nach einem der vorhergehenden Ansprüche, **dadurch gekennzeichnet, dass** die flexiblen Wände aus einem Elastomermaterial hergestellt sind.

15. Verfahren zum Steuern eines Hybridluftschiffs (1) nach einem der vorhergehenden Ansprüche, **dadurch gekennzeichnet, dass** es derart umgesetzt wird, dass:
(a) bei einer aufsteigenden Phase mit dem Trägergas, das von einer der Wände Pᵢ zurückgehalten wird, mit i beliebig zwischen 1 und J, die Verbindungsmittel Vᵢ in geschlossener Konfiguration gehalten werden, so dass das Trägergas (G), das sich mit der Höhenlage ausdehnt, auf der Wand Pᵢ einen Druck ausübt, der eine elastische Verformung der Wand Pᵢ von einer Nennposition zu einer maximalen Verformungsposition bewirkt, in der sie sich gegen die Wand Pᵢ₊₁ anlegt, wobei das Volumen des Fachs Cᵢ dank einer Ableitung der anfänglich in diesem Fach Cᵢ vorgesehenen Luft im Wesentlichen auf nichts reduziert wird;
(b) dann, wenn sich die Wand Pᵢ in maximaler Verformungsposition befindet, die Verbindungsmittel Vᵢ derart geöffnet werden, dass die Wand Pᵢ ihre Nennposition durch automatisches Ausgleichen der Drücke des Trägergases (G) zu beiden Seiten dieser Wand Pᵢ wieder einnimmt;
(c) dann, gegebenenfalls, bei der Fortsetzung der aufsteigenden Phase und nach der Rückkehr der Wand Pᵢ in Nennposition, die Aktionen (a) und (b) für die Wand Pᵢ₊₁ so oft wie nötig wiederholt werden, solange i kleiner oder gleich J bleibt.

## Claims

1. A hybrid airship (1) having aerostatic and aerodynamic lift including:
- a means of propulsion (10);
- a flexible external envelope(2);
- at least one primary enclosure Ep filled with lifting gas (G), **characterized in that** the said primary enclosure Ep having an elastic wall P₁ separating this enclosure from compartment C₁, the latter having an elastic wall Pᵢ separating compartment C₁ from compartment Cᵢ, the latter having an elastic wall Pᵢ₊₁ separating the compartment Cᵢ from compartment Cᵢ₊₁, and so on up until elastic wall P_{J+1} separating compartment C_{J} from compartment C_{J+1} where J corresponds to a whole number greater than or equal to 1, each compartment Cᵢ being equally delimited by the flexible exterior envelope;
- a means of communication Vᵢ between each compartment Cᵢ and its adjacent compartment Cᵢ₊₁;
- a means of control (22) and means of communication Vᵢ;
the said means of control (22) being configured so as:
(a) during an ascent phase with lifting gas (G) retained by one of the walls Pᵢ with i being between 1 and J, to maintain the means of communication Vᵢ in a closed configuration so that the lifting gas, expanding with the altitude, exerts on wall Pᵢ a pressure capable of producing an elastic deformation of wall Pᵢ from a nominal position to a maximum deformation position in which it flattens itself against wall Pᵢ₊₁ by reducing the volume of compartment Cᵢ substantially to zero, due to an evacuation of the air initially occupying compartment Cᵢ ;
(b) then when wall Pᵢ is in the position of maximum deformation, to open the means of communication Vᵢ in such a way that wall Pᵢ returns to its nominal position, by automatic re-balancing of the pressure of the lifting gas on both sides of this wall Pᵢ;
(c) then where appropriate, during continuation of the ascent phase and after the return of wall Pᵢ to nominal position, to repeat actions (a) and (b) for wall Pᵢ₊₁ as many times as necessary as long as i remains less than or equal to J.

2. A hybrid airship according to claim 1, **characterised by** the said means of propulsion comprising one or more engines (10), preferably mounted on pivots in the transversal axis (12) of the hybrid airship.

3. A hybrid airship according to claim 1 or 2, **characterised by** the said flexible external envelope (2) forming a wing or two semi-wings (4), whose shape is maintained at least in part by the air / lifting gas located in the primary enclosure Ep and compartments Cᵢ.

4. A hybrid airship according to any of the previous claims, **characterised in that** the said primary enclosure Ep is constructed in the center of the airship, and that a series of compartments Cᵢ extend either side of the primary enclosure, in a transversal direction (20) of the airship.

5. A hybrid airship according to the previous claim, **characterised in that** the two series of compartments Cᵢ are arranged symmetrically in relation to the symmetrical plane (P') of the airship.

6. A hybrid airship according to any of the previous claims, **characterised in that** the means of communication Vᵢ comprise, for each elastic wall Pᵢ, an electrovalve built into the associated elastic wall Pᵢ.

7. A hybrid airship, according to the previous claim, **characterised in that** it equally comprises an air exit electrovalve Vₑₓₜ associated with compartment C_{J+1}, and configured so as to stop / authorise communication of air between compartment C_{J+1} and the exterior of the airship.

8. A hybrid airship according to the previous claim, **characterised in that** the said means of control (22) are configured so that during an ascent phase, with means of communication Vᵢ in a closed configuration so that the lifting gas (G) exerts on wall Pᵢ a pressure capable of producing an elastic deformation of wall Pᵢ, the said means of communication Vᵢ₊₁ to V_{J+1} as well as the said air exit electrovalve Vₑₓₜ are maintained in an open configuration.

9. A hybrid airship according to any of claims 1 to 6, **characterised in that** it comprises a fluid conduit (30) leading to the exterior of the airship, and the means of communication Vᵢ for each elastic wall Pᵢ where i ranges from 1 to J+1:
- an intermediate electrovalve V_{int i} mounted on the fluid conduit (30);
- an electrovalve V'ᵢ₋₁ on one side connected upstream of the intermediate electrovalve V_{int i} in relation to the direction of flow to the exterior of the airship, and on the other side communicating with compartment Cᵢ₋₁ or the primary enclosure for i=1; and
- an electrovalve V'ᵢ on one side connected downstream of the intermediate electrovalve V_{int i} in relation to a direction of flow towards the exterior of the airship, and on the other side communicating with compartment Cᵢ.

10. A hybrid airship according to the previous claim, **characterised in that** the said means of control (22) are configured so that during an ascent phase, the maintaining in a closed configuration of the means of communication Vᵢ, controlled so that the lifting gas (G) exerts on wall Pᵢ a pressure capable of producing an elastic deformation of wall Pᵢ, is ensured by maintaining in a closed configuration the said electrovalve V'ᵢ₋₁ and/or the said intermediate electrovalve V_{int i}, and by maintaining the said electrovalve V'ᵢ in an open configuration.

11. A hybrid airship according to the previous claim, **characterised in that** the said means of control (22) are configured so that during an ascent phase, with the means of communication Vᵢ in a closed configuration so that the lifting gas exerts on wall Pᵢ a pressure capable of producing an elastic deformation of wall Pᵢ, the intermediate electrovalves V_{int i+1} to V_{int J+1} are maintained in an open configuration.

12. A hybrid airship according to any one of the previous claims, **characterised in that** it comprises means (24) of introducing air into compartment C_{J+1}, during a descent phase of the hybrid airship during which lifting gas (G) shrinks with the loss of altitude.

13. A hybrid airship according to any of the previous claims, **characterised in that** the said flexible exterior envelope (2) is manufactured from a material less flexible than that of the said elastic walls.

14. A hybrid airship according to any of the previous claims, **characterised in that** the said elastic walls are manufactured from an elastomer material.

15. A control procedure for the hybrid airship (1) according to any of the previous claims, **characterised in that** it is implemented so that:
(a) during an ascent phase with the lifting gas retained by one of the walls Pᵢ where i is between 1 and J, the means of communication Vᵢ are maintained in a closed configuration so that the lifting gas (G), expanding with the altitude, exerts on wall Pᵢ a pressure producing an elastic deformation of wall Pᵢ from a nominal position to a maximum deformation position **in that** it flattens against wall Pᵢ₊₁ by reducing the volume of compartment Cᵢ substantially to zero, via an evacuation of the air initially occupying this compartment Cᵢ;
(b) then when wall Pᵢ is in the maximum deformation position, the means of communication Vᵢ are opened so that wall Pᵢ returns to its nominal position nominal, via automatic rebalancing of the pressure of lifting gas (G) on either side of this wall Pᵢ;
(c) then, as necessary, during the continuation of the ascent phase and after return of wall Pᵢ to its nominal position, the actions (a) and (b) are repeated for wall Pᵢ₊₁ as many times as necessary as long as i remains less than or equal to J.
